# EUROPEAN PATENT APPLICATION

(11) **EP 0 641 590 A1**
(43) Date of publication of application: **08.03.1995**
(21) Application number: 94113712.7
(22) Date of filing: 01.09.1994
(51) Int. Cl.: B01D 53/047

(54) **Adsorption process for oxygen removal using a multi-layered adsorbent bed**

(30) Priority: 03.09.1993 US 116428
(71) Applicant: AIR PRODUCTS AND CHEMICALS, INC., Allentown, PA 18195-1501 (US)
(72) Inventor: Golden, Timothy Christopher, Allentown, PA 18104 (US); Kumar, Ravi, Allentown, PA 18103 (US); Wang, Andrew Wilson, Slatington, PA 18080 (US)
(74) Representative: Kador & Partner

(57) **Abstract**

A process is set forth for removing oxygen from an oxygen-containing feed stream comprising passing the oxygen-containing stream through a multi-layered adsorption bed comprising a kinetic based oxygen-selective adsorbent at the feed end of the bed and an equilibrium based oxygen-selective adsorbent at the product end of the bed wherein regeneration of the bed includes a "hybrid repressurization" scheme which involves simultaneously repressurizing the bed with a portion of both the product stream and the feed stream.

## Description

### TECHNICAL FIELD

The present invention relates to an adsorption process for oxygen removal using a multi-layered adsorbent bed comprising a kinetic based oxygen-selective adsorbent at the feed end of the bed and an equilibrium based oxygen-selective adsorbent at the product end of the bed.

### BACKGROUND OF THE INVENTION

An adsorption process for oxygen removal using a multi-layered adsorbent bed comprising a kinetic based oxygen-selective adsorbent at the feed end of the bed and an equilibrium based oxygen-selective adsorbent at the product end of the bed is taught in the art. Specifically, Japanese Laid-Open Patent Application No. 63-240914 by Takahashi et al. teaches such a process. A key advantage of such a multi-layered bed design is that because the kinetic based adsorbent (typically a carbon molecular sieve or a zeolite) accomplishes the bulk of the oxygen removal, the rapid kinetics and high selectivity of the equilibrium adsorbent can be utilized for trace oxygen removal without subjecting the equilibrium adsorbent to destructively high oxygen concentrations.

There is a problem in Takahashi, however, in that Takahashi uses product gas alone to repressurize the adsorbent bed. This is not very practical where the product gas is expensive such as in the case of oxygen removal from an argon stream. The present invention minimizes this problem with a "hybrid repressurization" scheme which involves simultaneously repressurizing the bed with a portion of both the product stream and the feed stream.

Although hybrid repressurization is taught in the art with respect to single layer adsorption beds (see for example US Patent 4,917,710 by Haruna et al.), heretofore, the art does not teach hybrid repressurization in the context of a multi-layered adsorbent bed comprising a kinetic based oxygen-selective adsorbent at the feed end of the bed and an equilibrium based oxygen-selective adsorbent at the product end of the bed. Furthermore, the art heretofore does not recognize that, as discussed infra, hybrid repressurization scheme is uniquely suited for repressurization of a multi-layered bed such as Takahashi's.

### SUMMARY OF THE INVENTION

The present invention is a process for removing oxygen from an oxygen-containing feed stream comprising passing the oxygen-containing stream through a multi-layered adsorption bed comprising a kinetic based oxygen-selective adsorbent at the feed end of the bed and an equilibrium based oxygen-selective adsorbent at the product end of the bed wherein regeneration of the bed includes a "hybrid repressurization" scheme. The hybrid repressurization scheme comprises repressurizing the bed with a portion of both the product stream and the feed stream wherein the product stream is introduced into the product end of the bed while the feed stream is simultaneously introduced into the feed end of the bed.

### DETAILED DESCRIPTION OF THE INVENTION

To better understand the present invention, it is important to understand the prior art with respect to a process for removing oxygen from an oxygen-containing feed stream comprising:
(a) passing the oxygen-containing stream through a multi-layered adsorption bed having a feed end and a product end wherein said bed contains a kinetic based oxygen-selective adsorbent at its feed end and an equilibrium based oxygen-selective adsorbent at its product end to produce an oxygen saturated adsorption bed and an oxygen-depleted product stream;
(b) depressurizing the bed to produce an oxygen-enriched product stream; and
(c) repressurizing the bed.

In the prior art, step (c)'s repressurization step is accomplished exclusively with a portion of the oxygen-depleted product stream produced in step (a). This is not very practical, however, where the oxygen-depleted product stream is very valuable. The present invention minimizes this problem by using a hybrid repressurization scheme comprising repressurizing the bed in step (c) with a portion of both the oxygen-depleted product stream and the feed stream wherein the oxygen-depleted product stream is introduced into the product end of the bed and wherein the feed stream is introduced into the feed end of the bed.

The skilled practitioner will appreciate that the tradeoff of using feed gas for repressurization is the efficiency of the subsequent adsorption step since, ideally, none of the repressurization gas should be adsorbed during repressurization. This negative impact on the subsequent adsorption step is offset, however, by the fact that less product gas is used in repressurization which is important where the product gas is expensive (for example where the product gas is argon). Furthermore, even in Takahashi where only product gas is used to repressurize the bed, the kinetic-based adsorbent (as opposed to the equilibrium based adsorbent) will still tend to adsorb some of the product gas. Thus, this negative impact on the subsequent adsorption step will not be as great in Takahashi's adsorption bed as it would be in a bed which contained exclusively an equilibrium based adsorbent. It follows that the present invention's hybrid repressurization technique is uniquely suited to Takahashi's adsorption bed.

In one embodiment of the present invention, steps (a) through (c) are performed as a continually repeating cycle of steps in a system comprising a plurality of adsorption beds which each undergo their respective cycle of steps while collectively operated sequentially in parallel with one another.

A preferred embodiment of the present invention uses the equilibrium oxygen-selective adsorbents taught in US Patents 5,126,466 and 5,239,098 by Ramprasad et al. As discussed in these patents, the Ramprasad adsorbents are preferred in that they have the following properties:
(1) a reversible isotherm having a Langmuir Type I shape;
(2) fast adsorption and desorption kinetics;
(3) infinite selectivity for oxygen;
(4) no phase change in oxygenation/deoxygenation cycle;
(5) a pressure swing working capacity which is sufficient to avoid the use of a vacuum during regeneration; and
(6) a structural integrity which is sufficient to avoid the need to be supported and which therefore allows the adsorbent to be used in small bed volumes.

It should be noted that since nitrogen is not adsorbed by the Ramprasad adsorbents per (3) above, product repressurization of the Ramprasad adsorbent portion of the bed offers the following advantages:
(1) It provides some additional purge of the Ramprasad adsorbent portion of the bed;
(2) In contrast to single layer carbon molecular sieve or a zeolite beds, a smaller amount of product gas will be needed to raise the pressure, therefore saving product; and
(3) The repressurization product gas, all in the voids of the Ramprasad adsorbent, is recovered in the feed step.

It should also be noted that where the feed contains water, the adsorption bed can contain an initial layer of a desiccant material in order to dry the feed stream before it reaches the kinetic based oxygen-selective adsorbent at the feed end of the bed.

Finally, it should be noted that the present invention can be adapted to virtually any pressure swing adsorption cycle, such as cycles that include the following steps:
(1) purging/rinsing the adsorption bed with a portion of the less adsorbable component either immediately before or immediately after the depressurization step;
(2) with respect to a system comprising a plurality of adsorption beds which each undergo their respective cycle of steps while collectively operated sequentially in parallel with one another, one or more pressure equalization transfers, during each of which, a portion of the depressurization effluent from one of said plurality of beds is transferred to another bed as partial repressurization gas, thereby equalizing the pressures of the two beds involved in each pressure equalization transfer; and
(3) depressurization to sub-ambient pressure levels.

## Claims

1. In a process for removing oxygen from an oxygen-containing feed stream comprising:
(a) passing the oxygen-containing stream through a multi-layered adsorption bed having a feed end and a product end wherein said bed contains a kinetic based oxygen-selective adsorbent at its feed end and an equilibrium based oxygen-selective adsorbent at its product end to produce an oxygen saturated adsorption bed and an oxygen-depleted product stream;
(b) depressurizing the bed to produce an oxygen-enriched product stream; and
(c) repressurizing the bed;
the improvement comprising repressurizing the bed in step (c) with a portion of both the oxygen-depleted product stream and the feed stream wherein the oxygen-depleted product stream is introduced into the product end of the bed while the feed stream is simultaneously introduced into the feed end of the bed.

2. The process of Claim 1 wherein the oxygen-containing feed stream comprises oxygen and argon.

3. The process of Claim 1 wherein the oxygen-containing feed stream comprises air.

4. The process of Claim 1 wherein steps (a) through (c) are performed as a continually repeating cycle of steps in a system comprising a plurality of adsorption beds which each undergo their respective cycle of steps while collectively operated sequentially in parallel with one another.

5. The process of Claim 1 wherein the adsorption bed contains an initial layer of a desiccant material in order to dry the feed stream before it reaches the kinetic based oxygen-selective adsorbent.

6. The process of Claim 1 wherein the adsorption bed is purged/rinsed with a portion of the less adsorbable component immediately before the depressurization step.

7. The process of Claim 1 wherein the adsorption bed is purged/rinsed with a portion of the less adsorbable component immediately after the depressurization step.

8. The process of Claim 4 which further comprises one or more pressure equalization transfers, during each of which, a portion of the depressurization effluent from one of said plurality of beds is transferred to another bed as partial repressurization gas, thereby equalizing the pressures of the two beds involved in each pressure equalization transfer.
